# EUROPEAN PATENT APPLICATION

(11) **EP 1 304 089 A1**
(43) Date of publication of application: **23.04.2003**
(21) Application number: 02022932.4
(22) Date of filing: 10.10.2002
(51) Int. Cl.: A61C 13/10, A61C 13/00

(54) **Artificial tooth holder and preparation method of denture**

(30) Priority: 19.10.2001 JP 2001322459
(71) Applicant: GC Corporation, Itabashi-ku, Tokyo 174 (JP)
(72) Inventor: Shinozaki, Yutaka, Itabashi-ku, Tokyo 174 (JP); Kumagai, Tomohiro, Itabashi-ku, Tokyo 174 (JP)
(74) Representative: Müller-Boré & Partner Patentanwälte

(57) **Abstract**

An artificial tooth holder is constituted of artificial teeth held in the same arrangement order as natural teeth on an artificial tooth holder main body via a heat polymerization type or photopolymerization type paste-like denture base material. The denture is prepared by taking out artificial teeth necessary for the preparation of a denture from an artificial tooth holder together with the paste-like denture base material and placing them on a residual ridge of a gypsum cast reproduced for an oral cavity of a patient; and, after trimming into a desired denture shape by adding a replenishing paste-like denture base material which is mutually polymerizable with the paste-like denture base material according to necessity before or after the paste-like denture base material being placed, polymerizing and curing the paste-like denture base material by heat polymerization or photopolymerization.

## Description

The present invention relates to an artificial tooth holder where artificial teeth are arranged and held via a paste-like denture base material and to a preparation method of a denture for preparing a denture using artificial teeth taken out from the artificial tooth holder together with the paste-like denture base material.

Hitherto, the preparation of a denture has been carried out in a process usually called as a lost wax process. That is, an impression within an oral cavity of a patient is taken to prepare a gypsum cast; a denture base section and an occlusion rim are formed on the gypsum cast using a dental wax or the like; the denture base section and the occlusion rim are set in an articulator; artificial teeth held with a tacky wax on an artificial tooth plastic holder are taken out one by one from the artificial tooth plastic holder; the tacky wax attached to the artificial teeth is cleanly washed out upon exposure to hot water or the like; and the entire of the denture base is subjected to shape arrangement such as arrangement of artificial teeth and formation of a gingival section, while adjusting the occlusion on the denture base section, thereby preparing a wax denture having a shape the same as a desired denture. Thereafter, the wax denture is taken out from the articulator and invested together with the gypsum cast in a flask using an investing plaster; the wax portion is washed out with hot water or the like, to form a cavity of the denture base section in an investment; a heat polymerization type denture base material comprising a powder comprised of polymethyl methacrylate as a major component and a liquid comprised of methyl methacrylate as a major component is weighed and mixed, and the mixture is allowed to stand for a certain period of time to form like a dough, which is then filled within the cavity formed in the investing plaster; the resulting mixture is polymerized and cured by dipping in hot water; and after cooling, the polymerized and cured material is excavated from the investment and then subjected to trimming and polishing. Thus, according to the conventional art, it took a long period of time and a lot of labors to prepare the denture.

Further, the following has been employed as a preparation method without using the lost wax process. That is, an impression within an oral cavity of a patient is taken to prepare a gypsum cast; and a denture base section and an occlusion rim are formed on the gypsum cast using a photopolymerization type paste-like denture base material comprising a methacrylate-based monomer, a filler and a polymerization initiator in place of the dental wax. In the case of the denture base section, if desired, actinic rays are irradiated to effect primary polymerization. After setting in an articulator, the paste-like denture base material which will become a gingival section is built up; artificial teeth held with a tacky wax on an artificial tooth plastic holder are taken out one by one from the artificial tooth plastic holder; the tacky wax attached to the artificial teeth is cleanly washed out upon exposure to hot water or the like; the entire of the denture base is subjected to shape arrangement such as arrangement of artificial teeth and formation of a gingival section, while adjusting the occlusion on the denture base section; and actinic rays are irradiated to achieve ultimate polymerization and curing, followed by polishing. Such denture preparation method is disclosed in JP-A-62-117552.

However, in the case where the arrangement work of artificial teeth is carried out for every tooth, there were involved defects that it is difficult to properly provide a gap between the artificial teeth to be arranged and that among the artificial teeth in the arrangement, even those which are not required to be moved are erroneously moved. Accordingly, this method required a skill in the arrangement of artificial teeth and took a very long period of time and delicacy. On the other hand, there was employed a method in which connected teeth in a form where several artificial teeth are connected in advance are used. However, this method involved a defect that since the size of the artificial teeth to be arranged and the kind of arrangement pattern are limited, the method cannot be applied to all dentures.

Thus, the present invention is aimed to provide an artificial tooth holder by which various complicated steps required for the preparation of a denture are reduced and the arrangement work of artificial teeth, which has hitherto required a skill, is made simple and to provide a preparation method of a denture using the artificial tooth holder.

In order to achieve the above-described aim, the present inventors made extensive and intensive investigations. As a result, they have found the following matters. That is, the denture preparation methods of the conventional art required operations such that artificial teeth held on an artificial tooth plastic holder with a tacky wax for ensuring good adhesion between the artificial teeth and a denture base are taken out one by one from the artificial tooth plastic holder and that the tacky wax attached to the artificial teeth is cleanly washed out upon exposure to hot water or the like, so as to not lower the adhesiveness to the denture base material. In order to make such operations unnecessary and omit the complicated steps for taking out the artificial teeth one by one from the artificial tooth plastic holder and arranging the artificial teeth, when the artificial teeth are held on an artificial tooth holder via a paste-like denture base material that can be used as a denture base material as it stands, by taking out the artificial teeth together with the paste-like denture base material and placing them on a gypsum cast, it is not necessary to take out the artificial teeth one by one from the artificial tooth plastic holder and arrange them, and hence, such a complicated step for arranging the artificial teeth at predetermined gaps can be reduced, thereby making the preparation of a denture easy. The present invention has thus been completed based on these findings.

Specifically, the present invention is concerned with an artificial tooth holder comprising artificial teeth held in the same arrangement order as natural teeth on an artificial tooth holder main body via a heat polymerization type or photopolymerization type paste-like denture base material and also with a process for preparing a denture using the artificial tooth holder. As the artificial tooth holder according to the present invention are preferred an embodiment in which, in the case where the paste-like denture base material is of a photopolymerization type, the artificial tooth holder is covered by a light-screening material such that the paste-like denture base material is not polymerized prior to the preparation of a denture and an embodiment in which the artificial teeth are arranged on the paste-like denture base material in accordance with an average arrangement standard of a human being, namely the artificial teeth are arranged in an arch state closed to the arrangement of natural teeth within an actual oral cavity.

The denture preparation method according to the present invention is a process for preparing a denture, which comprises taking out artificial teeth necessary for the preparation of a denture from an artificial tooth holder comprising artificial teeth held in the same arrangement order as natural teeth on an artificial tooth holder main body via a heat polymerization type or photopolymerization type paste-like denture base material, together with the paste-like denture base material and placing them on a residual ridge of a gypsum cast reproduced for an oral cavity of a patient; and after adjusting into a desired denture shape, polymerizing and curing the paste-like denture base material by heat polymerization or photopolymerization to prepare a denture. In this process, there may be employed a method in which, before or after taking out artificial teeth necessary for the preparation of a denture from an artificial tooth holder comprising artificial teeth held in the same arrangement order as natural teeth on an artificial tooth holder main body via a heat polymerization type or photopolymerization type paste-like denture base material, together with the paste-like denture base material and placing them on a residual ridge of a gypsum cast reproduced for an oral cavity of a patient, a replenishing paste-like denture base material which is mutually polymerizable with the paste-like denture base material is added; and, after trimming into a desired denture shape, the paste-like denture base materials are polymerized and cured by heat polymerization or photopolymerization to prepare a denture. In this case, it is more preferred to use a paste-like denture base material for the preparation of a denture base section or an occlusion rim section, and/or a paste-like denture base material for the preparation of a cervix or adjustment of a gap between artificial teeth, as the replenishing paste-like denture base material, depending upon the utility.

Fig. 1 is a plane view of one example of an artificial tooth holder in which anterior teeth are arranged and held on a plane.

Fig. 2 is a left-side view of Fig. 1.

Fig. 3 is a plane view of another example of an artificial tooth holder in which anterior teeth are arranged and held on a plane.

Fig. 4 is a left-side view of Fig. 3.

Fig. 5 is a plane view showing an embodiment in which the artificial tooth holder of Fig. 1, wherein a paste-like denture base material arranging and holding the artificial teeth is a photopolymerization type paste-like denture base material, is covered by a cover comprising a light-screening material.

Fig. 6 is a left-side view of Fig. 5.

Fig. 7 is a perspective view of one example of an artificial tooth holder in which anterior teeth are arranged and held in accordance with an average arrangement standard of a human being.

Fig. 8 is a perspective view showing the state in which the artificial teeth are taken out from the artificial tooth holder of Fig. 7 together with a paste-like denture base material.

Fig. 9 is a plane view of one example of an artificial tooth holder in which molars are arranged and held on a plane.

Fig. 10 is a perspective view of a gypsum cast reproduced for an oral cavity.

Fig. 11 is a perspective view showing the state in which an anterior tooth section taken out from an artificial tooth holder together with a paste-like denture base material is installed on a residual ridge of a gypsum cast.

Fig. 12 is a perspective view showing the state in which a replenishing paste-like denture base material is added in the state of Fig. 11 and the shape is adjusted.

Fig. 13 is a perspective view showing the state in which a molar section between E-F and between F-G in Fig. 9 is taken out from the artificial tooth holder and installed on the residual ridge of the gypsum cast of Fig. 12, and the shape is adjusted.

The artificial tooth holder and denture preparation method according to the present invention will be described below in detail with reference to the drawings.

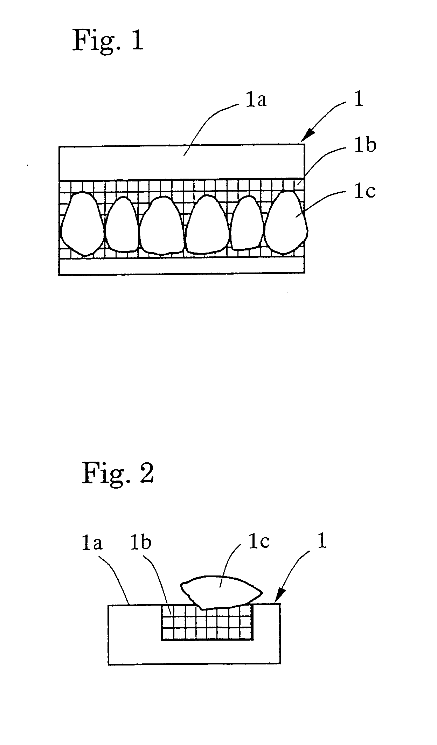

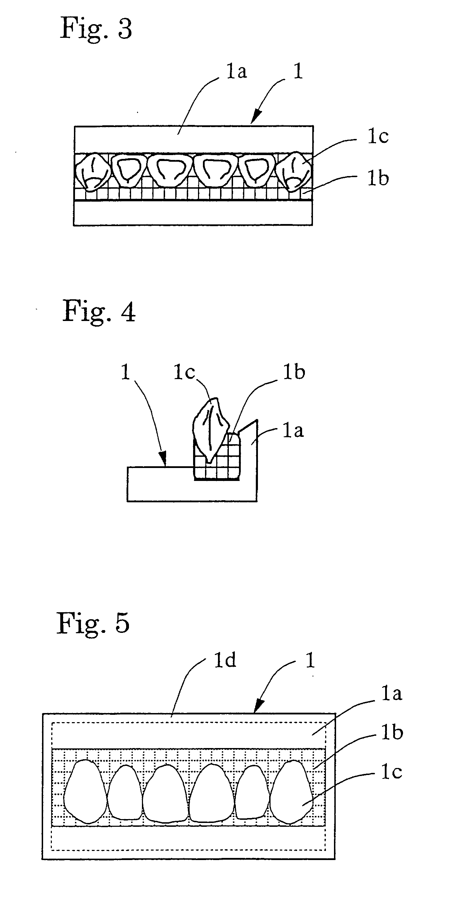

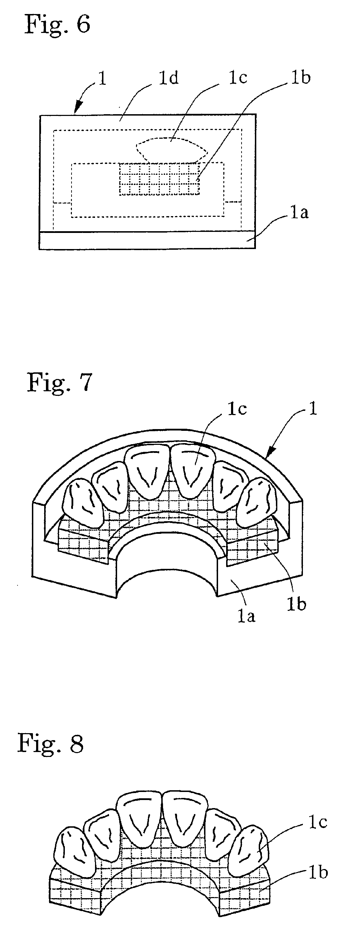

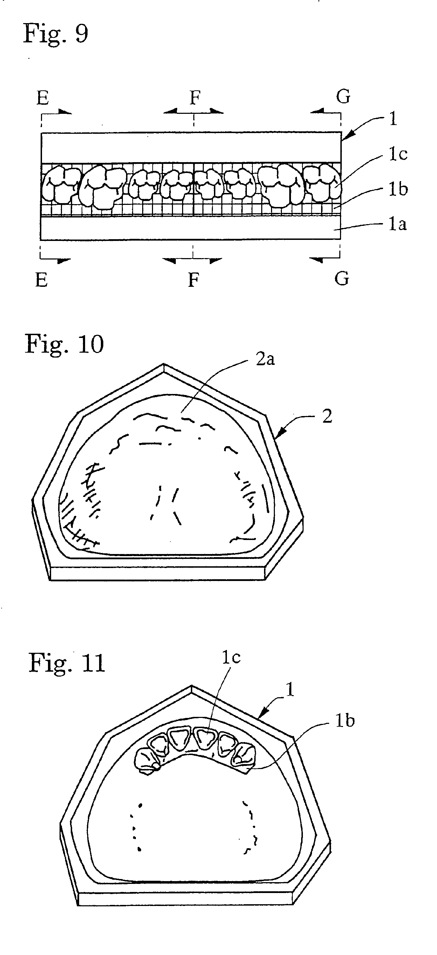

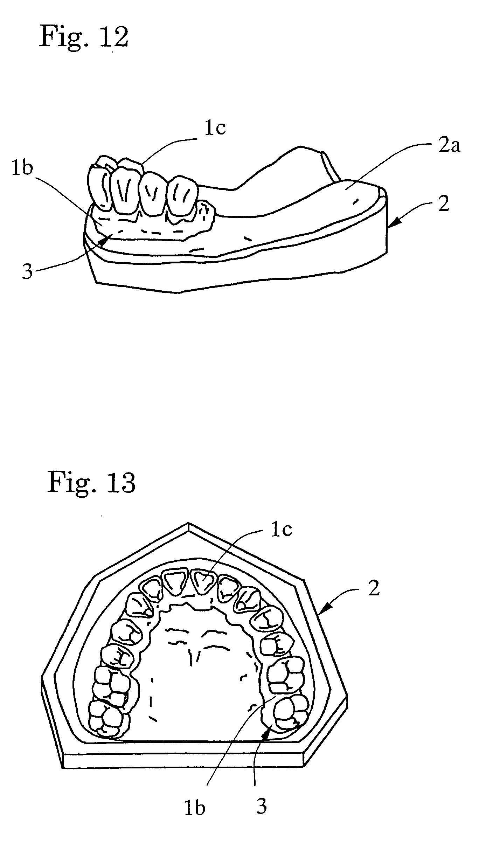

Fig. 1 is a plane view of one example of an artificial tooth holder in which anterior teeth are arranged and held on a plane. Fig. 2 is a left-side view of Fig. 1. Fig. 3 is a plane view of another example of an artificial tooth holder in which anterior teeth are arranged and held on a plane. Fig. 4 is a left-side view of Fig. 3. Fig. 5 is a plane view showing an embodiment in which the artificial tooth holder of Fig. 1, wherein a paste-like denture base material arranging and holding the artificial teeth is a photopolymerization type paste-like denture base material, is covered by a cover comprising a light-screening material. Fig. 6 is a left-side view of Fig. 5. Fig. 7 is a perspective view of one example of an artificial tooth holder in which anterior teeth are arranged and held in accordance with an average arrangement standard of a human being. Fig. 8 is a perspective view showing the state in which the artificial teeth are taken out from the artificial tooth holder of Fig. 7 together with a paste-like denture base material. Fig. 9 is a plane view of one example of an artificial tooth holder in which molars are arranged and held on a plane. Fig. 10 is a perspective view of a gypsum cast reproduced for an oral cavity. Fig. 11 is a perspective view showing the state in which an anterior tooth section taken out from an artificial tooth holder together with a paste-like denture base material is installed on a residual ridge of a gypsum cast. Fig. 12 is a perspective view showing the state in which a replenishing paste-like denture base material is added in the state of Fig. 11 and the shape is adjusted. Fig. 13 is a perspective view showing the state in which a molar section between E-F and between F-G in Fig. 10 is taken out from the artificial tooth holder and installed on the residual ridge of the gypsum cast of Fig. 12, and the shape is adjusted.

In the drawings, a numeral 1 is an artificial tooth holder comprising artificial teeth 1c held in the same arrangement order as natural teeth on an artificial tooth holder main body 1a made of, e.g., a plastic, via a heat polymerization type or photopolymerization type paste-like denture base material 1b. Preferably, the artificial teeth 1c are arranged on the paste-like denture base material 1b in accordance with an average arrangement standard of a human being, namely the artificial teeth are arranged in an arch state closed to the arrangement of natural teeth within an actual oral cavity, as shown in Fig. 7.

In the case where the paste-like denture base material 1b is a photopolymerizable paste-like denture base material, in order to prevent the paste-like denture base material 1b from occurrence of polymerization prior to the use, it is preferred that the entire of the artificial tooth holder 1 is covered by a cover comprising a light-screening material 1d, as shown in Figs. 5 and 6. Further, it is more preferred that the artificial tooth holder main body 1a is made thick or is made of a light-screening material 1d, thereby preventing the paste-like denture base material 1b from occurrence of polymerization and curing through exposure to light prior to the use.

It is necessary that the artificial teeth 1c are held in the same arrangement order as natural teeth such that no rearrangement is required. In order to make it easy to achieve shade matching with natural teeth of a patient, the artificial teeth 1c may be held on the paste-like denture base material 1b in a manner such that the cheek side of the artificial teeth 1c can be seen, as shown in Fig. 1. But, it is preferred that the cervix is held on the paste-like denture base material 1b in a manner such that the artificial teeth 1c are easily arranged during the denture preparation, as shown in Figs. 3, 7 and 9.

As the paste-like denture base material 1b, among paste-like denture base materials which have been conventionally used in the dentistry, are employable heat polymerization type or photopolymerization type paste-like denture base materials exclusive of cold polymerization type paste-like denture base materials which are possibly polymerized prior to the actual use. These heat polymerization type or photopolymerization type paste-like denture base materials are comprised of a methacrylate-based monomer, a filler, a polymerization initiator, and other additives such as a ultraviolet light absorber and a coloring agent, whose viscosity is adjusted into one in a paste-like form or clay-like form such that they can be easily formed by means of a spatula or the like. Specific examples of the methacrylate-based monomer include methyl methacrylate, ethyl methacrylate, isopropyl methacrylate, 2-hydroxyethyl methacrylate, 3-hydroxypropyl methacrylate, 2-hydroxy-1,3-dimethacryloxypropane, n-butyl methacrylate, isobutyl methacrylate, butoxyethyl methacrylate, hydroxypropyl methacrylate, tetrahydrofurfuryl methacrylate, glycidyl methacrylate, 2-methoxyethyl methacrylate, 2-ethylhexyl methacrylate, benzyl methacrylate, ethylene glycol dimethacrylate, diethylene glycol dimethacrylate, triethylene glycol dimethacrylate, triethylene glycol trimethacrylate, butylene glycol dimethacrylate, neopentyl glycol dimethacrylate, 1,3-butanediol dimethacrylate, 1,4-butanediol dimethacrylate, 1,6-hexanediol dimethacrylate, trimethylolpropane trimethacrylate, trimethylolethane trimethacrylate, trimethylolmethane trimethacrylate, pentaerythritol trimethacrylate, pentaerythritol tetramethacrylate, polyoxytetraethylene glycol dimethacrylate, 2,2-bis(methacryloxyphenyl)propane, 2,2-bis[4-(2-hydroxy-3-methacryloxypropoxy)phenyl]propane, 2,2-bis(4-methacryloxydiethoxyphenyl)propane, and 2,2-bis-(4-methacryloxypolyethoxyphenyl)propane. Examples of methacrylates having a urethane bond in the molecule thereof include di-2-methacryloxyethyl- 2,2,4-trimethylhexamethylene dicarbamate, 1,3,5-tris[1,3-bis(methacryloyloxy)-2-propoxycarbonylaminohexane]-1,3,5-(1H,3H,5H)triazin-2,4,6-trione, a urethane oligomer consisting of 2,2'-di (4-hydroxycyclohexyl)propane, 2-oxepanone , hexamethylene diisocyanate and 2-hydroxyethyl methacrylate, and a urethane oligomer consisting of 1,3-butanediol, hexamethylene diisocyanate and 2-hydroxyethyl methacrylate.

As the filler, are employable organic fillers which have hitherto been used in the dentistry, such as polymers (e.g., polymethyl methacrylate, polyethyl methacrylate), and pulverized polymers prepared by polymerizing the foregoing monomer and then finely pulverizing it; and inorganic fillers such as silicon dioxide, glasses (e.g., barium glass, alumina glass, potassium glass, fluoroaluminosilicate glass), synthetic zeolite, calcium phosphate, feldspar, fumed silica, aluminum silicate, calcium silicate, magnesium carbonate, and quartz. These inorganic fillers may be subjected to a surface treatment with, e.g., γ-methacryloxypropyl trimethoxysilane, vinyl trichlorosilane, vinyl triethoxysilane, vinyl trimethoxysilane, vinyl triacetoxysilane, vinyl tri(methoxyethoxy)silane. Further, are employable so-called organic-inorganic composite fillers prepared by mixing the foregoing inorganic filler with a polymerizable monomer or oligomers in advance, curing the mixture and then pulverizing the cured mixture.

With respect to the polymerization initiator, as the heat polymerization type polymerization initiator, are mainly employed organic peroxides and azo compounds. As the organic peroxide, are preferred diacyl peroxides having an aromatic ring and peroxyesters that are seemed to be an ester of perbenzoic acid. Effective examples include benzoyl peroxide, 2,4-dichlorobenzoyl peroxide, m-tolyl peroxide, t-butyl peroxybenzoate, di-t-butyl peroxyisophthalate, 2,5-dimethyl-2,5-di(benzoylperoxy)hexane, and 2,5-dimethyl-2,5-di{(o-benzoyl)benzoylperoxy}hexane. As the azo compound, not only azobisisobutyronitrile but also organometallic compounds such as tributylboron are useful.

As the photopolymerization initiator is generally used a combination of a sensitizer with a reducing agent. Examples of the sensitizer that can be used include camphor quinone, benzil, diacetyl, benzyl dimethyl ketal, benzyl diethyl ketal, benzyl di(2-methoxyethyl) ketal, 4,4'-dimethylbenzyl dimethyl ketal, anthraquinone, 1-chloroanthraquinone, 2-chloroanthraquinone, 1,2-benzanthraquinone, 1-hydroxyanthraquinone, 1-methylanthraquinone, 2-ethylanthraquinone, 1-bromoanthraquinone, thioxanthone, 2-isopropylthioxanthone, 2-nitrothioxanthone, 2-methylthioxanthone, 2,4-dimethylthioxanthone, 2,4-diethylthioxanthone, 2,4-diisopropylthioxanthone, 2-chloro-7-trifluoromethylthioxanthone, thioxanthone-10,10-dioxide, thioxanthone-10-oxide, benzoin methyl ether, benzoin ethyl ether, isopropyl ether, benzoin isobutyl ether, benzophenone, bis(4-dimethylaminophenyl) ketone, 4,4'-bisdiethylaminobenzophenone, acyl phosphine oxide derivatives, and azide group-containing compounds. These compounds may be used alone or in admixture.

As the reducing agent are generally used tertiary amines. Preferred examples of the tertiary amine that can be used include N,N-dimethyl-p-toluidine, N,N-dimethylaminoethyl methacrylate, triethanolamine, methyl 4-dimethylaminobenzoate, ethyl 4-dimethylaminobenzoate, and isoamyl 4-dimethylaminobenzoate. As other reducing agents, are employable benzoyl peroxide, sodium sulfinate derivatives, and organometallic compounds. In the case of the photopolymerization type polymerization initiator, the polymerization reaction is achieved upon irradiation with actinic rays such as ultraviolet light and visible rays. As the light source, are employable various mercury vapor lamps of super high pressure, high pressure, medium pressure and low pressure, a chemical lamp, a carbon arc lamp, a metal halide lamp, a fluorescent lamp, LED, a tungsten lamp, a xenon lamp, and an argon ion laser.

A numeral 2 is a gypsum cast having a residual ridge 2a and the like as prepared using an impression within an oral cavity of a patient taken according to the usual manner. The gypsum cast 2 includes the case of a gypsum cast of an edentulous jaw as shown in Fig. 10 and the case of a gypsum cast where remaining teeth are present when a removable partial denture is prepared. In the latter case, the shape within an oral cavity of a patient may be partially reproduced.

A numeral 3 is a replenishing paste-like denture base material to be replenished and put into use in the case where the denture base material is insufficient only by the paste-like denture base material 1b of the artificial tooth holder 1. The replenishing paste-like denture base material 3 is basically constituted of the same configuration as the paste-like denture base material 1b. The replenishing paste-like denture base material 3 is integrated with the paste-like denture base material 1b and polymerized. Accordingly, it is required that the replenishing paste-like denture base material 3 is mutually polymerizable with the paste-like denture base material 1b. It is more preferred to properly use a paste-like denture base material for the preparation of a denture base section or an occlusion rim section, or a paste-like denture base material for the preparation of a cervix or adjustment of a gap between artificial teeth, as the replenishing paste-like denture base material 3, while adjusting the kind of compounding substances and compounding ratio thereof depending upon the utility.

In order to carry out the denture preparation method according to the present invention using the artificial tooth holder 1 having the above-described configuration according to the present invention, an impression within an oral cavity of a patient is first taken in a customary manner, and for example, the gypsum cast 2 as shown in Fig. 10 is then prepared utilizing the thus taken impression. Next, the artificial teeth 1c are taken out from the artificial tooth holder main body 1a of the artificial tooth holder 1 together with the paste-like denture base material 1b and placed on the residual ridge 2a of the gypsum cast 2, or, in the case of a maxilla, placed on a residual ridge made of a paste-like denture base material for the preparation of a denture base section or an occlusion rim section. During this time, for example, in the case where, in the artificial tooth holder 1, the artificial teeth 1c are arranged and held on a plane as in the embodiment shown in Fig. 3 or Fig. 5, the artificial teeth 1c are first arranged in an arch state closed to the arrangement of natural teeth within an actual oral cavity as shown in Fig. 8 and then placed on the residual ridge 2a of the gypsum cast 2 as shown in Fig. 11. Alternatively, in the case where, in the artificial tooth holder 1, the artificial teeth 1c are arranged and held in accordance with an average arrangement standard of a human being as in the embodiment shown in Fig. 7, the artificial teeth 1c are placed on the residual ridge 2a of the gypsum cast 2 as they are, as shown in Fig. 11. Next, the paste-like denture base material 1b is processed to prepare a denture base. In the case where the paste-like denture base material 1b is in excess, the excessive paste-like denture base material 1b is removed. Alternatively, in the case where the paste-like denture base material 1b is short, the replenishing paste-like denture base material 3 that is mutually polymerizable with the paste-like denture base material 1b is added. With respect to the replenishing paste-like denture base material 3, it is not always required to use one kind. By properly using a paste-like denture base material for the preparation of a denture base section or an occlusion rim section, or a paste-like denture base material for the preparation of a cervix or adjustment of a gap between artificial teeth, as the replenishing paste-like denture base material 3, depending upon the utility, not only the work efficiency is improved, but also the designing property of the denture becomes good. Thereafter, the denture is set in an articulator, and after arrangement of the artificial teeth and occlusal adjustment and arrangement, the paste-like denture base materials 1b and 3 are finally cured and polymerized by means of heat polymerization or photopolymerization. The resultant is subjected to final trimming and polishing, whereby a denture is completed.

During the preparation of the denture, it is not always required to polymerize the paste-like denture base materials 1b and 3 at the same time. That is, if desired, the paste-like denture base materials 1b and 3 may be subjected to primary polymerization at each of the preparation stages such as the preparation of a denture base section or an occlusion rim section and the arrangement of artificial teeth to an extent such that the shape does not change, and after completely adjusting the shape as a denture, the entire of the denture may be polymerized and cured.

In the case where a full denture is prepared, when all artificial teeth are not arranged at once, but every group of several artificial teeth is subjected to arrangement and orthodonture, the works become easy. For example, using the anterior tooth section as shown in Figs. 1, 3, 5 and 7 and the molar section as shown in Fig. 9, the anterior tooth section is first arranged as shown in Fig. 11. Next, the molar section is arranged as shown in Fig. 13. Thus, the full denture can be simply prepared. Further, in the case of a partial removable denture, the artificial teeth 1c considered necessary among the anterior tooth section and the molar section are taken out from the artificial tooth holder main body 1a together with the paste-like denture base material 1b, thereby preparing the denture. Thus, any dentures can be prepared through simple operations.

The artificial tooth holder and the denture preparation method according to the present invention will be described with reference to the following Examples, but it should not be construed that the invention is limited thereto.

### Example 1:

Components of a photopolymerization type paste-like denture base material in which artificial teeth are to be arranged and held were prepared in accordance with the following formulation.

| | |
|---|---|
| Tetrahydrofurfuryl methacrylate | 2 % by weight |
| Polybutylene glycol dimethacrylate | 2 % by weight |
| Di-2-methacryloxyethyl-2,2,4-trimethylhexamethylene dicarbamate | 38 % by weight |
| Urethane oligomer consisting of 2,2'-di(4-hydroxycyclohexyl)propane, 2-oxepanone , hexamethylene diisocyanate and 2-hydroxyethyl methacrylate | 16 % by weight |
| Organic filler | 40.9 % by weight |
| Camphor quinone | 0.5 % by weight |
| Ethyl 4-dimethylaminobenzoate | 0.5 % by weight |
| 6-tert-butyl-2,4-xylenol | 0.1 % by weight |

An artificial tooth holder covered by a light-screening material was prepared by building up this photopolymerization type paste-like denture base material on a plastic-made artificial tooth holder main body and arranging and holding artificial teeth for anterior teeth in accordance with an average arrangement standard of a human being as shown in Fig. 7. Also, an artificial tooth holder covered by a light-screening material was prepared by building up the same photopolymerization type paste-like denture base material on a plastic-made artificial tooth holder main body and arranging and holding artificial teeth for molars on a plane as shown in Fig. 9.

Then, an impression within an oral cavity was taken, and a gypsum cast was prepared using the impression. Next, the artificial teeth for anterior teeth were taken out from the artificial tooth holder from which the light-screening material had been removed, together with the paste-like denture base material and brought into press contact with the gypsum cast. Also, the artificial teeth for molars were taken out from the artificial tooth holder together with the paste-like denture base material and brought into press contact with the same gypsum cast. The resultant was set in an articulator. During this time, since the artificial teeth were held by the paste-like denture base material in the same arrangement order as natural teeth, a desired arrangement could be easily achieved by simple repair. Thus, an overall balance was adjusted, and the denture was irradiated with light for 5 minutes by a visible light curing unit (a trade name: Labolight LV-II, made by GC Corporation), thereby polymerizing and curing the paste-like denture base material. After trimming and polishing, a full plate denture was completed.

### Example 2:

(a) Components of a photopolymerization type paste-like denture base material in which artificial teeth are to be arranged and held were prepared in accordance with the following formulation.

| | |
|---|---|
| Tetrahydrofurfuryl methacrylate | 2 % by weight |
| Polybutylene glycol dimethacrylate | 2 % by weight |
| Di-2-methacryloxyethyl-2,2,4-trimethylhexamethylene dicarbamate | 38 % by weight |
| Urethane oligomer consisting of 2,2'-di(4-hydroxycyclohexyl)propane, 2-oxepanone , hexamethylene diisocyanate and 2-hydroxyethyl methacrylate | 16 % by weight |
| Organic filler | 40.9 % by weight |
| Camphor quinone | 0.5 % by weight |
| Ethyl 4-dimethylaminobenzoate | 0.5 % by weight |
| 6-tert-butyl-2,4-xylenol | 0.1 % by weight |

(b) A photopolymerization type replenishing paste-like denture base material, particularly a photopolymerization type paste-like denture base material for the preparation of a denture base section or an occlusion rim section, that is to be used for the preparation of a denture base section or an occlusion rim section, was prepared in accordance with the following formulation.

| | |
|---|---|
| Tetrahydrofurfuryl methacrylate | 2 % by weight |
| Polybutylene glycol dimethacrylate | 2 % by weight |
| Di-2-methacryloxyethyl-2,2,4-trimethylhexamethylene dicarbamate | 31 % by weight |
| Urethane oligomer consisting of 2,2'-di(4-hydroxycyclohexyl)propane, 2-oxepanone , hexamethylene diisocyanate and 2-hydroxyethyl methacrylate: | 14 % by weight |
| Organic filler | 49.9 % by weight |
| Camphor quinone | 0.5 % by weight |
| Ethyl 4-dimethylaminobenzoate | 0.5 % by weight |
| 6-tert-butyl-2,4-xylenol | 0.1 % by weight |

(c) A photopolymerization type replenishing paste-like denture base material, particularly a photopolymerization type paste-like denture base material for the preparation of a cervix or adjustment of a gap between artificial teeth, that is to be used for the preparation of a cervix or adjustment of a gap between artificial teeth and slightly flows spontaneously in a stationary state, was prepared in accordance with the following formulation.

| | |
|---|---|
| Tetrahydrofurfuryl methacrylate | 3 % by weight |
| Polybutylene glycol dimethacrylate | 3 % by weight |
| Di-2-methacryloxyethyl-2,2,4-trimethylhexamethylene dicarbamate | 44 % by weight |
| Urethane oligomer consisting of 2,2'-di(4-hydroxycyclohexyl)propane, 2-oxepanone , hexamethylene diisocyanate and 2-hydroxyethyl methacrylate | 20 % by weight |
| Organic filler | 28.9 % by weight |
| Camphor quinone | 0.5 % by weight |
| Ethyl 4-dimethylaminobenzoate | 0.5 % by weight |
| 6-tert-butyl-2,4-xylenol | 0.1 % by weight |

First, an artificial tooth holder covered by a light-screening material was prepared by building up the paste-like denture base material (a) on a plastic-made artificial tooth holder main body and arranging and holding artificial teeth for anterior teeth on a plane as shown in Fig. 3. Also, an artificial tooth holder covered by a light-screening material was prepared by building up the same paste-like denture base material (a) on a plastic-made artificial tooth holder main body and arranging and holding artificial teeth for molars on a plane as shown in Fig. 9.

Then, an impression within an oral cavity was taken, and a gypsum cast was prepared using the impression. Next, the paste-like denture base material (b) for the preparation of a denture base section or an occlusion rim section was formed in a sheet-like state and brought into press contact with the gypsum cast to form a denture base section, which was then set in an articulator. Next, the artificial teeth for anterior teeth were taken out from the artificial tooth holder from which the light-screening material had been removed, together with the paste-like denture base material (a), and the paste-like denture base material (a) was curved in accordance with an average arrangement standard of a human being and then brought into press contact with the gypsum cast. Also, the artificial teeth for molars were taken out together with the paste-like denture base material (a), and the paste-like denture base material (a) was curved in accordance with an average arrangement standard of a human being and then brought into press contact with the same gypsum cast. During this time, since the artificial teeth were held by the paste-like denture base material (a) in the same arrangement order as natural teeth, a desired arrangement could be easily achieved by simple repair. Next, fine gaps such as boundaries between the anterior teeth and the molars were filled with the paste-like denture base material (c) for the preparation of a cervix or adjustment of a gap site between artificial teeth. Thereafter, an overall balance was adjusted, and the denture was irradiated with light for 5 minutes by a visible light curing unit (a trade name: Labolight LV-II, made by GC Corporation), thereby polymerizing and curing the paste-like denture base materials (a), (b) and (c). After trimming and polishing, a full denture was completed.

### Example 3:

(a) Components of a photopolymerization type paste-like denture base material in which artificial teeth are to be arranged and held were prepared in accordance with the following formulation.

| | |
|---|---|
| Polybutylene glycol dimethacrylate | 3 % by weight |
| Di-2-methacryloxyethyl-2,2,4-trimethylhexamethylene dicarbamate | 32 % by weight |
| Urethane oligomer consisting of 2,2'-di(4-hydroxycyclohexyl)propane, 2-oxypanone, hexamethylene diisocyanate and 2-hydroxyethyl methacrylate | 19 % by weight |
| Organic filler | 28.9 % by weight |
| Ultrafine silica | 16 % by weight |
| Camphor quinone | 0.5 % by weight |
| Ethyl 4-dimethylaminobenzoate | 0.5 % by weight |
| 6-tert-butyl-2,4-xylenol | 0.1 % by weight |

(b) A photopolymerization type replenishing paste-like denture base material, particularly a photopolymerization type paste-like denture base material for the preparation of a denture base section or an occlusion rim section, that is to be used for the preparation of a denture base section or an occlusion rim section, was prepared in accordance with the following formulation.

| | |
|---|---|
| Polybutylene glycol dimethacrylate | 2 % by weight |
| Di-2-methacryloxyethyl-2,2,4-trimethylhexamethylene dicarbamate | 34 % by weight |
| Urethane oligomer consisting of 2,2'-di(4-hydroxycyclohexyl)propane, 2-oxepanone , hexamethylene diisocyanate and 2-hydroxyethyl methacrylate | 12 % by weight |
| Organic filler | 36.9 % by weight |
| Ultrafine silica | 14 % by weight |
| Camphor quinone | 0.5 % by weight |
| Ethyl 4-dimethylaminobenzoate | 0.5 % by weight |
| 6-tert-butyl-2,4-xylenol | 0.1 % by weight |

(c) A photopolymerization type replenishing paste-like denture base material, particularly a photopolymerization type paste-like denture base material for the preparation of a cervix or adjustment of a gap between artificial teeth, that is to be used for the preparation of a cervix or adjustment of a gap between artificial teeth and slightly flows spontaneously in a stationary state, was prepared in accordance with the following formulation.

| | |
|---|---|
| Tetrahydrofurfuryl methacrylate | 3 % by weight |
| Polybutylene glycol dimethacrylate | 3 % by weight |
| Di-2-methacryloxyethyl-2,2,4-trimethylhexamethylene dicarbamate | 45 % by weight |
| Urethane oligomer consisting of 2,2'-di(4-hydroxycyclohexyl)propane, 2-oxepanone , hexamethylene diisocyanate and 2-hydroxyethyl methacrylate | 20 % by weight |
| Organic-inorganic composite filler | 27.9 % by weight |
| Camphor quinone | 0.5 % by weight |
| Ethyl 4-dimethylaminobenzoate | 0.5 % by weight |
| 6-tert-butyl-2,4-xylenol | 0.1 % by weight |

First, an artificial tooth holder covered by a light-screening material was prepared by building up the paste-like denture base material (a) on a plastic-made artificial tooth holder main body and arranging and holding artificial teeth for anterior teeth in accordance with an average arrangement standard of a human being as shown in Fig. 7. Also, an artificial tooth holder covered by a light-screening material was prepared by building up the same paste-like denture base material (a) on a plastic-made artificial tooth holder main body and arranging and holding artificial teeth for molars on a plane as shown in Fig. 9.

Then, an impression within an oral cavity was taken, and a gypsum cast was prepared using the impression. Next, the paste-like denture base material (b) for the preparation of a denture base section or an occlusion rim section was formed in a sheet-like state and brought into press contact with the gypsum cast to form a denture base section, which was then set in an articulator. Next, the paste-like denture base material (b) for the preparation of a denture base section or an occlusion rim section, which was formed in a rod-like state, was built up as a gingival section on the denture base surface. Next, the artificial teeth for anterior teeth were taken out from the artificial tooth holder from which the light-screening material had been removed, together with the paste-like denture base material (a), and the paste-like denture base material (a) was formed into a curve in accordance with an average arrangement standard of human beings and then brought into press contact with the gypsum cast. Also, the artificial teeth for molars were taken out together with the paste-like denture base material (a), and the paste-like denture base material (a) was curved in accordance with an average arrangement standard of a human being and then brought into press contact with the same gypsum cast. During this time, since the artificial teeth were held by the paste-like denture base material (a) in the same arrangement order as natural teeth, a desired arrangement could be easily achieved by simple repair. Next, fine gaps such as boundaries between the anterior teeth and the molars were filled with the paste-like denture base material (c) for the preparation of a cervix or adjustment of a gap site between artificial teeth. Thereafter, an overall balance was adjusted, and the denture was irradiated with light for 5 minutes by a visible light curing unit (a trade name: Labolight LV-II, made by GC Corporation), thereby polymerizing and curing the paste-like denture base materials (a), (b) and (c). After trimming and polishing, a full denture was completed.

### Example 4:

(a) Components of a heat polymerization type paste-like denture base material in which artificial teeth are to be arranged and held were prepared in accordance with the following formulation.

| | |
|---|---|
| Polybutylene glycol dimethacrylate | 2.5 % by weight |
| Di-2-methacryloxyethyl-2,2,4-trimethylhexamethylene dicarbamate | 35 % by weight |
| Urethane oligomer consisting of 2,2'-di(4-hydroxycyclohexyl)propane, 2-oxepanone , hexamethylene diisocyanate and 2-hydroxyethyl methacrylate | 12.5 % by weight |
| Organic-inorganic composite filler | 29.75 % by weight |
| Powdered quartz subjected to surface treatment with vinyl trichlorosilane | 20 % by weight |
| Benzoyl peroxide | 0.15 % by weight |
| 6-tert-butyl-2,4-xylenol | 0.1 % by weight |

(b) A heat polymerization type replenishing paste-like denture base material, particularly a heat polymerization type paste-like denture base material for the preparation of a denture base section or an occlusion rim section, that is to be used for the preparation of a denture base section or an occlusion rim section, was prepared in accordance with the following formulation.

| | |
|---|---|
| Neopentyl glycol dimethacrylate | 2 % by weight |
| Polybutylene glycol dimethacrylate | 5 % by weight |
| Di-2-methacryloxyethyl-2,2,4-trimethylhexamethylene dicarbamate | 25 % by weight |
| Urethane oligomer consisting of 1,3-butanediol, hexamethylene diisocyanate and 2-hydroxyethyl methacrylate | 20 % by weight |
| Organic-inorganic composite filler | 47.75 % by weight |
| Benzoyl peroxide | 0.15 % by weight |
| 6-tert-butyl-2,4-xylenol | 0.1 % by weight |

First, an artificial tooth holder was prepared by building up the paste-like denture base material (a) on a plastic-made artificial tooth holder main body and arranging and holding artificial teeth for anterior teeth in accordance with an average arrangement standard of a human being as shown in Fig. 7. Also, an artificial tooth holder was prepared by building up the same paste-like denture base material (a) on a plastic-made artificial tooth holder main body and arranging and holding artificial teeth for molars on a plane as shown in Fig. 9.

Then, an impression within an oral cavity was taken, and a gypsum cast was prepared using the impression. Next, the paste-like denture base material (b) for the preparation of a denture base section or an occlusion rim section was formed in a sheet-like state and brought into press contact with the gypsum cast to form a denture base section. Also, using the paste-like denture base material (b) for the preparation of a denture base section or an occlusion rim section, an occlusion rim section was built up on the denture base surface, and the gypsum cast was set in an articulator. Then, a space for arranging the artificial teeth on the occlusion surface of the occlusion rim section was ensured, and the artificial teeth for anterior teeth were taken out from the artificial tooth holder together with the paste-like denture base material (a) and placed in the space corresponding to the position of the anterior teeth. Also, the artificial teeth for molars were taken out together with the paste-like denture base material (a), and the paste-like denture base material (a) was curved in accordance with an average arrangement standard of a human being and placed to achieve the arrangement of artificial teeth. During this time, since the artificial teeth were held by the paste-like denture base material (a) in the same arrangement order as natural teeth, a desired arrangement could be easily achieved by simple trimming. Thereafter, an overall balance was adjusted, and the denture was heated at 95 °C for 90 minutes by a hot air circulation type low-temperature thermostat (a trade name: *SOYOKAZE* SSF-115S, manufactured by Isuzu Seisakusho Co., Ltd.), thereby polymerizing and curing the paste-like denture base materials (a) and (b) . After trimming and polishing, a full denture was completed.

As described above in detail, in the artificial tooth holder according to the present invention, artificial teeth are not arranged and held by a wax as in the conventional artificial tooth holder but are arranged and held by a paste-like denture base material that can be used as a denture base as it stands. Accordingly, the artificial tooth holder according to the present invention is different from the conventional case wherein only an artificial tooth main body is taken out and placed on a denture base material one by one using a wax on a gypsum cast as separately prepared. Namely, in the artificial tooth holder according to the present invention, only by taking out the artificial teeth held in the same arrangement order as natural teeth as they are, together with the paste-like denture base material, and placing them on a gypsum cast, and then trimming the shape, a high-degree arrangement work of artificial teeth can be achieved.

In addition, the denture preparation method according to the present invention is concerned with a process for preparing a denture using the above-described artificial tooth holder according to the present invention. In accordance with the preparation method of the present invention, the denture can be directly prepared, without need to prepare a wax denture as in the conventional lost wax process. Accordingly, the preparation method according to the present invention is an easy method with a markedly reduced number of preparation steps, as compared with the conventional denture preparation methods requiring a number of preparation steps and a very long period of time, so that the required preparation period, which has hitherto been several days to several weeks, can be greatly reduced. Thus, the present invention is greatly valuable in contributing to the dental remedy.

## Claims

1. An artificial tooth holder comprising artificial teeth held in the same arrangement order as natural teeth on an artificial tooth holder main body via a heat polymerization type or photopolymerization type paste-like denture base material.

2. The artificial tooth holder according to claim 1, wherein the paste-like denture base material is of a photopolymerization type, and the artificial tooth holder is covered by a light-screening material.

3. The artificial tooth holder according to claim 1 or 2, wherein the artificial teeth are arranged on the paste-like denture base material in accordance with an average arrangement standard of a human being.

4. A process for preparing a denture, which comprises taking out artificial teeth necessary for the preparation of a denture from an artificial;tooth holder comprising artificial teeth held in the same arrangement order as natural teeth on an artificial tooth holder main body via a heat polymerization type or photopolymerization type paste-like denture base material, together with the paste-like denture base material and placing them on a residual ridge of a gypsum cast reproduced for an oral cavity of a patient; and after adjusting into a desired denture shape, polymerizing and curing the paste-like denture base material by heat polymerization or photopolymerization to prepare a denture.

5. The process for preparing a denture according to claim 4, wherein, before or after taking out artificial teeth necessary for the preparation of a denture from an artificial tooth holder comprising artificial teeth held in the same arrangement order as natural teeth on an artificial tooth holder main body via a heat polymerization type or photopolymerization type paste-like denture base material, together with the paste-like denture base material and placing them on a residual ridge of a gypsum cast reproduced for an oral cavity of a patient, a replenishing paste-like denture base material which is mutually polymerizable with the paste-like denture base material is added; and, after adjusting into a desired denture shape, the paste-like denture base materials are polymerized and cured by heat polymerization or photopolymerization to prepare a denture.

6. The process for preparing a denture according to claim 5, wherein the replenishing paste-like denture base material is a paste-like denture base material for the preparation of a denture base section or an occlusion rim section, and/or a paste-like denture base material for the preparation of a cervix or adjustment of a gap between artificial teeth.
